# EUROPEAN PATENT APPLICATION

(11) **EP 0 887 549 A1**
(43) Date of publication of application: **30.12.1998**
(21) Application number: 97600005.9
(22) Date of filing: 27.06.1997
(51) Int. Cl.: F03G 7/10

(54) **Rotational mechanical power generating system**

(71) Applicant: Karramanoukian, Haroutoun, Aleppo (SY)
(72) Inventor: Karramanoukian, Haroutoun, Aleppo (SY)
(74) Representative: Argyriadis, Korinna

(57) **Abstract**

A machine mechanically controlled to generate power by using the gravity force consisting of main arms (6), secondary arms (9) and tertiary arms (16) with accessories, characterized in that the arms move simultaneously in opening and closing manner through articulated joints and bearings, the machine rotating as a whole, where a lower articulated bar (28) assisting movement of the secondary arm (9) in high position, moving by the ball bearing (27), when the secondary arm (9) rests thereon, causes the articulated bar (28) to carry on its stroke with the secondary arm (9) in the amount of 20 % of the stroke remaining for the secondary arm, with the main arm (6) and accesories.

## Description

This invention relates to a mechanical system mechanically controlled to generate rotational mechanical power by using the principle of permanent neutralization of the forces affecting the center of gravity (gravitational and centrifugal force) in a rotating system depending in its rotation on the employment of gravitational acceleration to close and open the main arms of the system, through secondary articulated arms.

### Background of the invention

Power producing sources available at present mostly depend on utilizing the natural resources and their different possibilities, either from underground, the ground surface or around the earth.

To depend on such traditional sources in power generation began to worry the international public opinion and scientific circles, due to the exhaustion of some sources on the one hand, and the damages it causes on human health and live creatures resulting from environment pollution on the other hand. Adding to that, it causes an unbalanced state on natural resources. Therefore, scientific circles and research centers in the world started to employ all their possibilities towards finding substitute power sources, to put limits to the increase of environment pollution, and maintain the balance of natural factors.

The present invention fulfils this target specifically, as it leads to generate power without relying on any of the above mentioned traditional sources, but rather by a machine designed for continuous rotation, with a mechanical method depending on utilizing gravitation to rotate the machine. This rotational mechanical system is quite different from the other operation systems known up to this date. It is different by the absolute control of the movement (neutralization) of the center of gravity related to equilibrium, through the addition of a secondary overloaded articulated arm, of an equal effect, when its operation is controlled by a mechanical device installed on the system itself, namely in a quite developed method different from that in the European Patent application No. 92600008.4/24.09.1992.

The present invention can be used to construct electric power generation stations instead of the traditional electric power generation stations, which depend for their electricity generation on the different types of power sources known up to this date, such as oil, nuclear energy, hydro-dams, wind power, solar power etc. Whereas, the present invention depends on a very plentiful power source that has not been used yet, the permanent force of the gravitational acceleration. Furthermore, this system is pollution free.

The economic cost of the present invention is very low when compared with the traditional methods of power generation, as it was found that the cost of the machine is about 25 % of the costs of thermal stations machines, which means that it costs only one quarter of the value, and does not need any daily supplies of oil or gas or other fuel.

Since gravity is employed to rotate the machine, meaning that it depends on the energy of gravitation instead of fuels, it also leads to saving the great quantities of fuels being permanently burned in the thermal power stations. The non-usage of fuels leads to protect environment from pollution by the exhaust gases,

The dependance on gravitation, which is available all over the globe, enables the installation of the machine also on ships and water vessels of all types instead of their traditional engines. Furthermore, the metals used in its production are plentifully available all over the world.

### Brief description of the invention

The invention consists of the following functional devices that have been installed on the main axle of both ends, which are specially designed for the mechanical control system installed on the mechanical system itself:
1. A big central flange (2), with the following specifications:
   a. Assembling places at both ends for the main articulated arm (6), equiped with the main weights (74), whose basis is linked with the rotation discs (4) against it, for the purpose of achieving the equilibrium on rest bearings (15).
   b. Fastening equipment for the parts receiving the shock, and shock absorbing pistons (20) for the main articulated arm.
   c. Curved pieces installed on both sides (13), equiped with driving rods for the purpose of releasing and moving shock-receiving parts and shock absorption pistons (20).
2. Rotating discs (4) for fastening the secondary articulated arm (9), whose external ends are equiped with secondary loads (8), and fixing equipment for shock absorption pistons (20).

The big central flange (2) is installed on the main axle (1), which is equiped with symmetrical main articulated arms (6) on both sides. The main articulated arms (6) are equiped with main weights (74), which are useful to get to the unbalanced condition, through the neutralization which can be regularly controlled and is related to the gravitational force and centrifugal force affecting the center of gravity, through indirect opening and closing of the main articulated arms (6).

The force affecting rotation direction of the big central flange (2) and the rotational direction of the main axle (1) is in clockwise direction.

The process of opening and closing directing the main articulated arms (6) on half of the big central flange (2), which are separately and symmetrically distributed, operates in a way that when one articulated arm (6) affects the weight of the main weights (74) through the indirect effect of the secondary articulated arm (9), equiped with secondary loads (8), shifting from the lateral half to the closing position, the seven other main articulated arms (6) would have been just opened through the effect of the secondary and main weights. The eighth arm will be in opening position from bottom, in the position just against (opposite) the eighth arm. The seven remaining arms will all be in closing position located onto the main axle (1), as those, in order to carry on again in the lateral half of the big central flange (2), which should be closed, will have to be reopened again, one after the other, under the effect of the secondary articulated arms and their weights.

The eruption of the forces that have been activated is indirectly proportional with the start angle every time related to the main articulated arms (6) on the main axle (1), and with the weight of main weights (74) and number of main articulated arms (6) placed on the big central flange (2), and consequently whenever the opening angle is big, or, in otherwords, whenever the closing angle is small for the main articulated arms (6) on the main axle (1), the number of main articulated arms (6) located onto the big central flange (2) is great, which increases the achievement of the permanent neutralization principle and the surplus forces to benefit from. The proportion of the difference of the weights of the main weights (74) can be considered as related to the weight equilibrium of the secondary loads (8) at the rate 1:2, and when neutralizing the main weights (74), it is necessary to proportionally maintain the rate of secondary loads weight, and thereby it will be possible to delete the disturbances of the system rotation.

### Brief description of the drawings

Fig. 1 shows the main axle of the machine.

Fig. 2 shows the main arms of the machine and their movement.

Fig. 3 shows the secondary arms and their details.

Fig. 4 shows the main weights.

Fig. 5 shows the secondary loads.

Fig. 6 shows the secondary arms mounted on discs.

Fig. 7 shows the spring in detail.

Fig. 8 shows the operation of the secondary arms and the tertiary arms.

Fig. 9 shows details of the main arms.

Fig.10 shows the weight on the main articulated arms.

Fig. 11 shows the mounting of the cables and their operation.

Fig. 12 shows details of the receiver (30) of rest bearings (15) of the main arms and the adjustable rod (31) connecting the receiver to the ball bearing (24) of the tertiary arms.

Fig. 13 shows details of the shock absorption pistons.

Fig. 14 shows details of the basis of the main axle.

Fig. 15 shows details of the tertiary arm equipment.

Fig. 16 shows a diagram of the main axle.

Fig. 17 shows details of the closing switch of the tertiary arm.

Fig. 18 shows details of the basis of the ball bearing of the articulated bar to regulate opening and closing of main arm at high and low position respectively.

Fig. 19 shows details of the roller for braking operation.

Fig. 20 shows details of the axis for the ball bearings.

Fig. 21 shows details of the ball bearings.

Fig. 22 shows a general view of the machine in section.

### Detailed description of specific embodiment

The invention consists of the following functional devices that have been installed on the operation column of both ends, which are specially designed for the mechanical control system installed on the mechanical system itself:

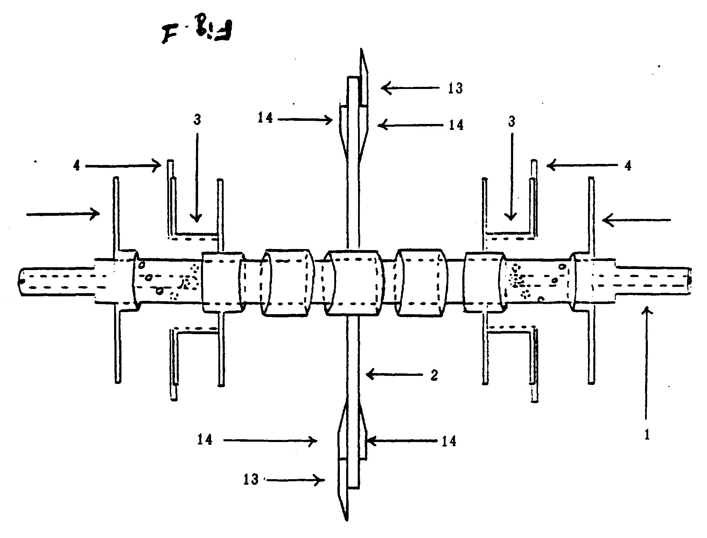

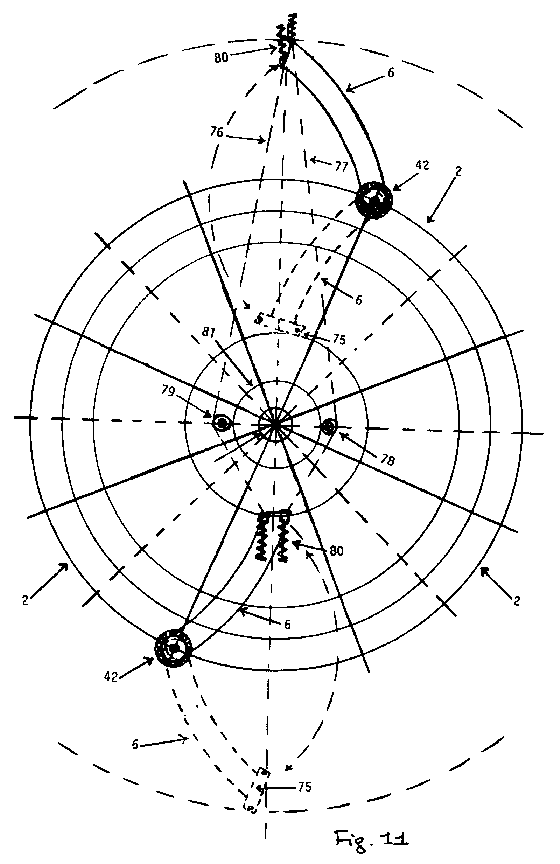

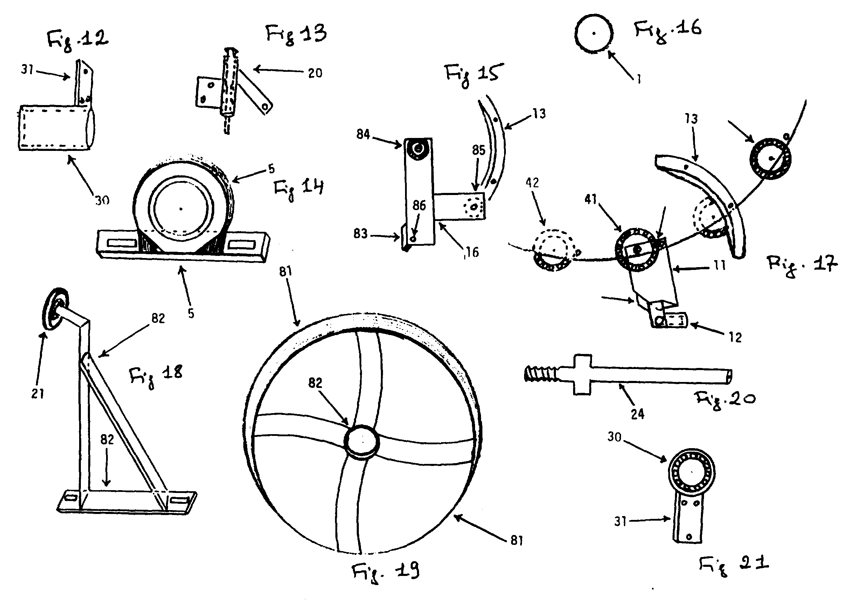

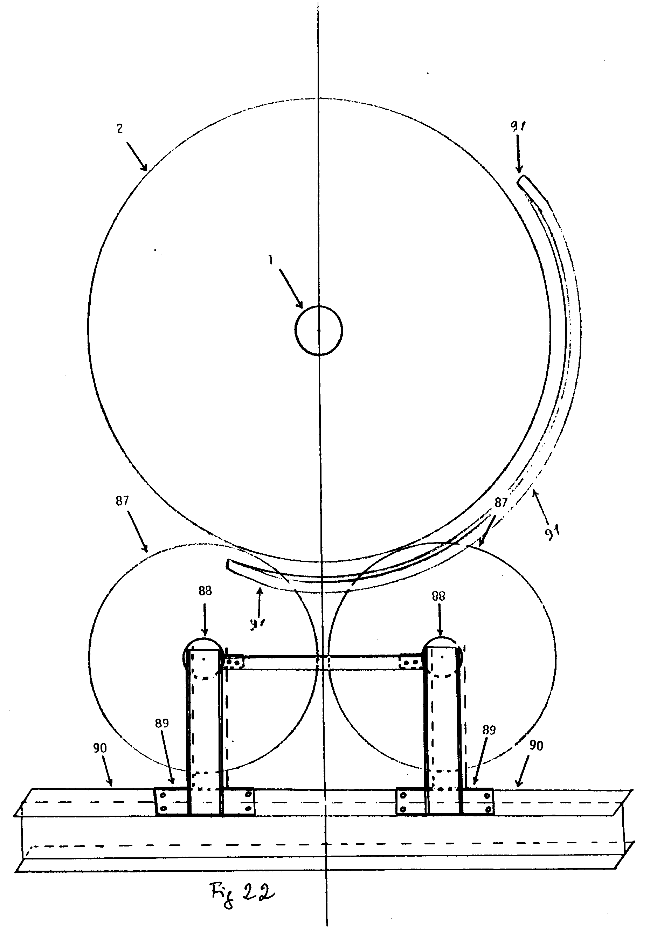

The machine of the present invention, as shown in Figures 1-22, consists of sixteen main arms (6), which all constitute the main power of the machine, and a secondary arm (9) is to face each main arm (6), i.e. sixteen secondary arms (9), and against them there are sixteen tertiary arms (16), and each of these third group arms has its own accessories. When the main arms (6) move, simultaneously a secondary arm (9) and tertiary arm (16) with accessories move also with it through the articulated joints and bearings, and the machine is rotating as a whole of sixteen main arms (6) moving simultaneously with sixteen secondary (9) and sixteen tertiary arms (16) and their accessories.

The number of arms may be increased or decreased according to need. The number of main, secondary and tertiary arms, however, must always be a multiple of four.

A lower articulated bar (28) assisting movement of the secondary arm (9) in high position, moving by the ball bearing (27), when the secondary arm (9) rests thereon, causes the articulated bar (28) to carry on its stroke with the secondary arm (9) in the amount of 20 % of the stroke remaining for the secondary arm, with the main arm (6) and accesories.

The previous operation of the articulated bar (28) and the ball bearing (27) are useful to absorb the shock of the secondary arm (9) first, then removing the articulated bar with three branches (32). As a result of moving the articulated bar (32), the bar with two branches (33) assisting transmission of movement, installed on the basis (34) of the secondary arm (9), which is a metal part installed on the disc (4) and connecting between the bars (32) and (33) moves, and the movement is shifted from the bar (33) to rod (35) to move the spring equipment (36), whose action is to assist the articulated basis (10) for the secondary arms (9) on which loads (8) are installed, for the purpose of achieving the balance of the basis (29) for the articulated bars (22), (23), (27) and (28), and the stationary basis of the basis (34), which is a base for the articulated bar (28) to assist movement of the secondary arm in high position and the ball bearing (27) to absorb shock and conserve surplus force.

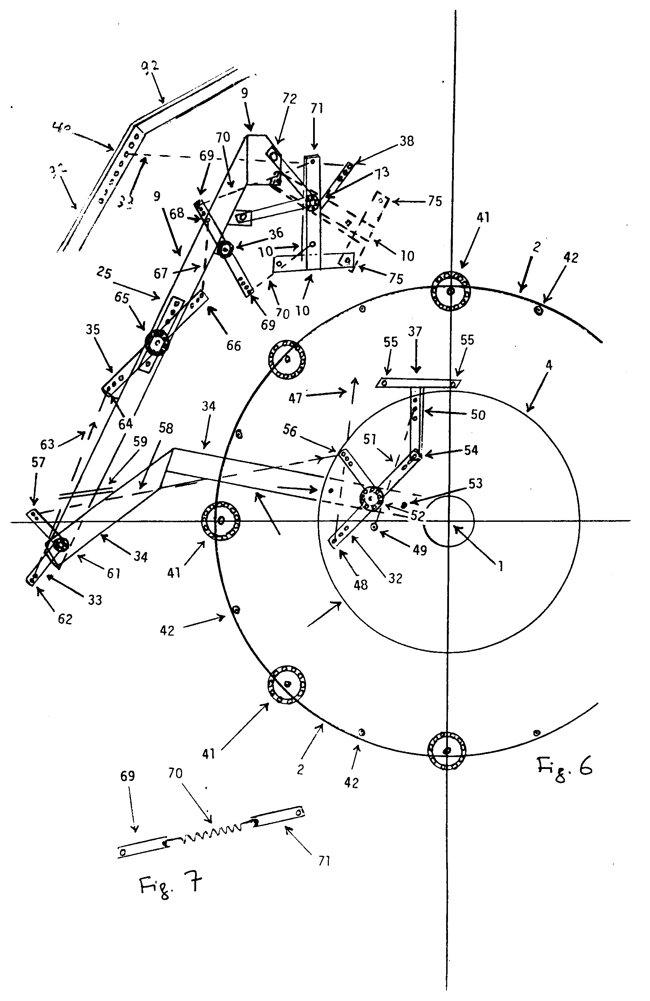

In addition to the function of the basis (29) for articulated bars (22), (23), (27) and (28) as a basis for the ball bearings (27) and the articulated bar (28), it works on the same time in assisting the main arm (6) while opened from top, as illustrated in Figure 5. In addition, the basis (29) is a basis for the articulated bars (22), (23), (27) and (28), which is at the same time responsible for assisting the main arm (6) while closed from bottom.

Explaining the principle of permanent neutralization of the forces affecting the center of gravity in a rotating system depending on its rotation on utilizing the gravity to open and close the main arms (6) of the system through the articulated secondary arms (9), is as follows:

The shape of the secondary articulated arm (9) and its relation with the main arm (6), which is considered the body of the machine, is a basic relation assisting in the permanent movement of the machine by the actual reliance on the gravitational acceleration.

The secondary arm (9) is opened under the effect of its articulated basis (10) as shown in Figure 4, installed on which the load (8), which takes an oval direction with the assistance of the ball bearing (27) and the articulated bar (28), which means that it goes far from its rotation center and consequently achieves the permanent neutralization principle of the forces affecting the center of gravity in a rotating system. The main arm (6) is opened under the effect of the connecting bar (26), and after the main and secondary two arms pass one third of the stroke specified for both of them, they both rest on the tertiary arm (16), whose function is to absorb the shocks and is equiped with an automatic switch center (12) and a basis (11) fixed on the big central flange (2), and when the three arms move together to the end of the specified stroke, the special switch automatically switches off, which is adjusted on the spring of the third arm, which leads to storing a potential force within the automatic switch center (12) that can be used while lifting the secondary arm (9) from bottom to top. This stored potential force is considered a very great additional force, which appears when closing the main arm (6) at the bottom of the machine, which is being closed in the direction of the center of the rotating system, and consequently, after passing one third of the stroke for the two secondary and main arms, the basis (11) of the automatic switch center (12) automatically opens and consequently leads to closing the main arm (6) through the connecting bar (26) and pushing the secondary arm (9), and so on. This process is being done for every arm, and the number of arms in the rotating system is preferably sixteen arms, at present, which can be increased or decreased upon request, always by four.

The function of the secondary arm (9) and accessories is to assist the main arm (6) in opening and closing only, and has no relation or effect on the main power of the machine, as the machine power is directly connected with the main arms (6). The secondary arm (9) has an important role, as it assists in increasing the number of machine rotations during the opening of the main arm (6) and their rotation together, main and secondary, alongwith their accessories, and thereby this system forms one mass at the stroke end, as the system is complete, namely the main arm, the tertiary, secondary arm and their accessories strongly open at the stroke end, the thing which increases the number of the machine rotations.

There is another method for increasing the machine rotations number, which is by using the articulated basis (37) for weights installed on the bar with three branches (32) by increasing the weights as per request to increase the machine rotations, the thing which directly affects the articulated joint for springs (36) and movement is immediately and quickly transmitted to the articulated basis for secondary arms (10).

The articulated bar (18) to regulate opening and closing of the main arms at high and low position respectively is oval shaped and it functions with the assistance of the ball bearing (21). It is charged to perform with infinite accuracy the control process of the process of opening and closing all the machine arms, and consequently to control the regulation of rotation process and equalized distribution of the power created by the machine.

The steel cables (76, 77), which connect between each two main arms (6) are dedicated to regulate the machine rotation, and the spring-joints (80), connected to the terminals of those cables, are to prevent loosening of the steel cables, as the lower main arm (6) closing operation is always performed before the process of opening the upper main arm (6).

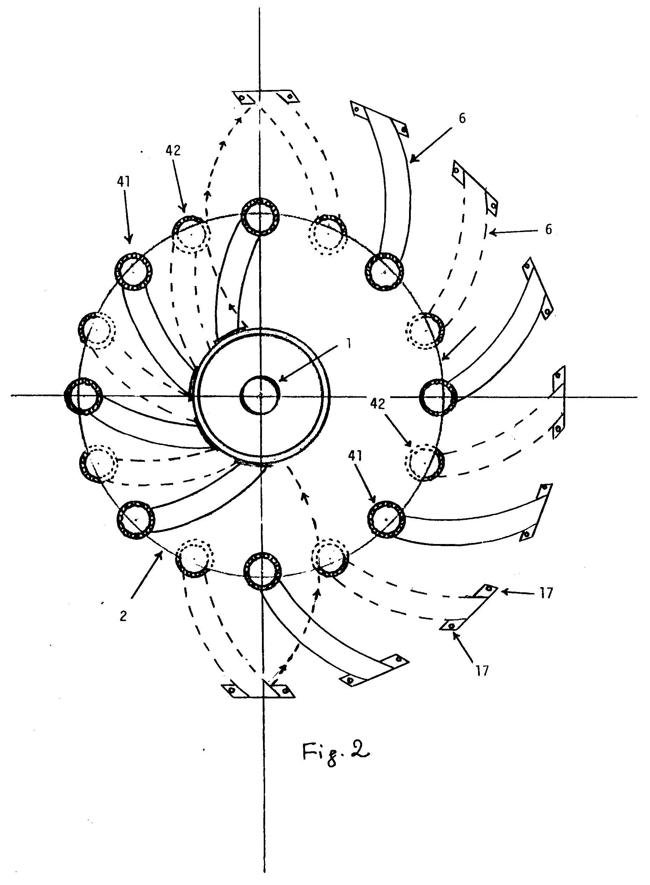

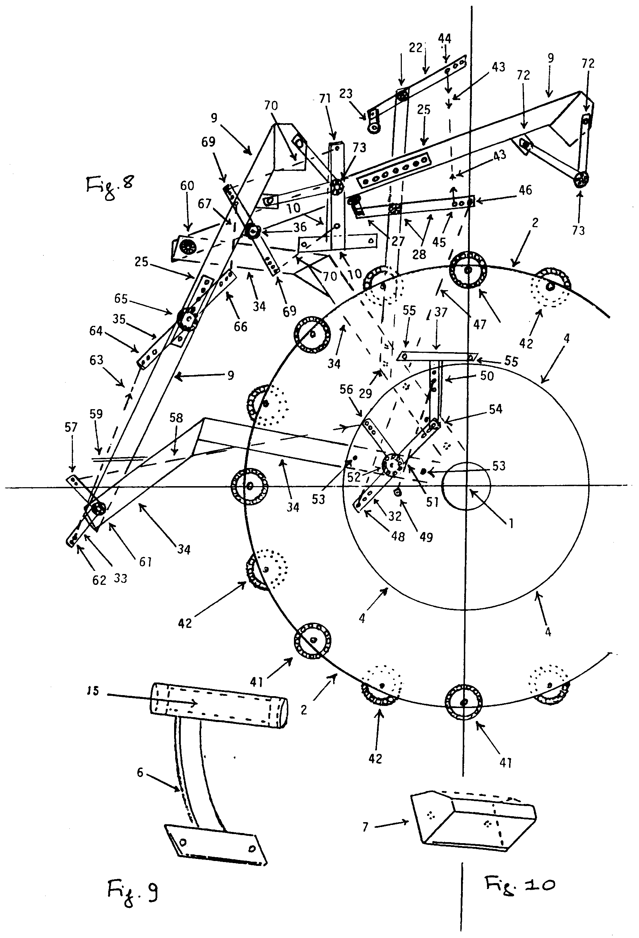

The two rollers (78, 79) in Figure 7 are cable supporters, and they act to prevent the loosening of the lower main arm (6) at the moment when the secondary arm (9) reaches to the balance position illustrated in Figure 2. The process of connecting the steel cables (76, 77) is illustrated in Figure 6 to brake the machine rotation and stop it. A brake is installed on the machine both sides, consisting of the small flange - brake roller (81), in addition to the brake collier, and is installed on the main axle (1) of the machine. Figure 7 illustrates the brake and its roller.

The machine starts regular rotation within a very short time, which does not exceed five seconds from the moment of removing its braking, that is the brake (81) with the basis of the ball bearing (82) installed on the main axle (1), and rotation process is performed as follows:

At first, rotation starts through the machine main arms (6), which is the machine power, as the closest main arm (6), on which the articulated bar (18) to regulate opening and closing is installed, comes close to the ball bearing (21) and rests thereon, and therefrom the process of opening the main arm (6) starts from top (top of machine), and at the same time another main arm (6) at the bottom of the machine is being closed, as the closed lower main arm (6) approaches to the machine main axle (1), and this operation carries on as long as there is no braking applied thereon. Main arms (6) are being assisted to open and close by the secondary arms (9), as the function of the secondary arm (9) is to decrease the weight (74) loaded on the main arm (6) in a rate of 98 %, in a way that only 2 % of the load weight remains to regulate the number of machine rotations. It was possible to decrease the previous weight 100 % through the increase of the weight loaded on the secondary arm (9), but it is preferable to keep 2 % of the weight in order to regulate the rotation process. Rotation regulation is performed in the following form: The remaining weight, which is 2 %, rests onto the ball bearing (21) for the purpose of starting the opening process from top and closing process from bottom.

The assistance of the secondary arm in opening the main arm from top and closing from bottom is achieved as follows:

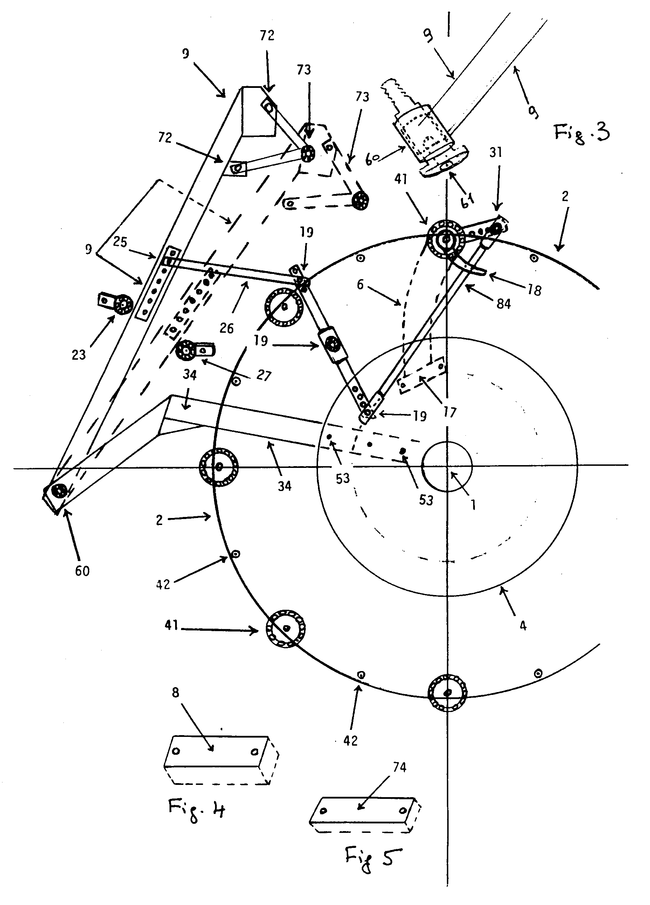

There is a close relation between the main arm (6) and the secondary arm (9) through the connecting bar (26), which links the secondary arm (9) to the main arm (6), as illustrated in Figure 3, and thus the connecting bar (26) will be in the following form, as it will be fixed on the adjustable rod (25) connecting on the secondary arm, and articulating at the two joints (19), where there is a joint (84) connecting between the joint (19) and the adjustable rod (31) connecting the receiver (30) of the main arm rest bearings (15) to the ball bearing (24) of the tertiary arm (16), installed on the main arm (6).

When the secondary arm (9) moves under the effect of gravity with a small angle towards down, as illustrated in Figure 3, it changes position as shown in Figure 3. This leads to the movement of all the joints related to the connecting bar (26) between the main and secondary arms, leading consequently to opening the main arm (6) from top, and the same movement is also applied to the secondary arm (9) from bottom, as it returns back to its original position under the gravity effect as well. It means that everything returns to its previous position, and the lower main arm is closed approaching the main axle (1) of the machine, and thus movement of the arms carries on, one after the other.

The following is always noticed during the machine rotation or stopped position as illustrated in Figure 2:

As already mentioned, the machine consists of sixteen arms. It is noticed that seven arms are open while moving downwards, i.e. towards the gravity, and the eighth arm is in opening position from top, whereas the nineth one is in closing position from bottom, and the remaining arms, which are seven, are completely closed and close to the main axle. Movements of the main eighth and nineth arms are illustrated in the dotted arrows in Figure 2.

Following is an explanation and statement of the numbers and their indices illustrated in the Figures attached with the description of the present invention:
1. Main axle
2. Big central flange
3. Basis for discs
4. Discs on both sides
5. Basis of main axle
6. Main articulated arm
7. Weight on main articulated arm
8. Secondary loads on articulated basis for weights
9. Secondary articulated arm
10. Articulated basis for secondary arms
11. Basis for tertiary arm fixed on big central flange (2)
12. Automatic first switch center of tertiary arm
13. Curved piece to articulate the second switch of tertiary arm
14. Curved piece (13) fixed on big central flange (2)
15. Rest bearings for main arms
16. Tertiary articulated arm
17. Center for fixing the weights of main arm
18. Articulated bar to regulate opening and closing of main arm at high and low position respectively
19. Joint of secondary arm to the main arm
20. Shock absorption pistons of main arm
21. Ball bearing of articulated bar (18)
22. Articulated bar to assist movement of basis (10) for secondary arms, fixed on disc (4), attached to fixed basis on disc (4)
23. Ball bearing as stopper of articulated bar (22)
24. Ball bearing of tertiary arm
25. Adjustable rod connecting secondary arm to the connecting bar (26)
26. Connecting bar between the secondary arm and the joint (19) of main arm
27. Ball bearing to absorb shock and conserve surplus force, assisting movement of basis (10) of secondary arm
28. Articulated bar to assist movement of secondary arm in high position
29. Basis for articulated bars (22), (23), (27) and (28) installed on disc (4)
30. Receiver of rest bearings (15) of main arm
31. Adjustable rod connecting the receiver (30) of main arm rest bearings to ball bearing (24) of tertiary arm
32. Bar with three branches assisting movement of secondary arm and its basis (10)
33. Bar with two branches assisting transmission of movement of secondary arm
34. Basis of secondary arm fixed on disc (4)
35. Articulated connecting rod fixed on secondary arm
36. Articulated joint for springs (70)
37. Articulated basis for weights (74)
38. Connecting bar between the adjustable rod (39) and ball bearing (40)
39. Adjustable rod assisting movement of secondary arms basis (10)
40. Ball bearing permitting movement of adjustable rod (39)
41. Basis for fixing main arm from the right side
42. Basis for fixing main arm from the left side
43. Tube connecting articulated bars (22) and (28)
44. Joint of tube (43) and articulated bar (22)
45. Joint of tube (43) and articulated bar (28)
46. Joint of tube (47) and articulated bar (28)
47. Tube connecting articulated bar (28) to bar with three branches (32)
48. Joint of tube (47) to bar with three branches (32)
49. Joint of tube (51) on disc (4)
50. Articulation bar bearing basis of weights (37)
51. Tube connecting articulation bar (50) and disc (4) through joint (49)
52. Central articulation ball bearing of bar with three branches (32)
53. Joint of basis of secondary arm (34) on disc (4)
54. Joint of articulation bar (50) and bar with three branches (32)
55. Fixing points of weights (74)
56. Joint of tube (58) to the bar with three branches (32)
57. Joint of tube (58) to bar with two branches (33)
58. Tube for transmission of movement of secondary arm
59. Fixing bar connecting the secondary arm to its basis (34)
60. Main joint of secondary arm to its basis (34)
61. Additional joint of bar with two branches (33) to secondary arm and its basis (34)
62. Joints of tube (63) to bar with two branches (33)
63. tube for transmission of movement from bar with two branches (33) to articulated connecting rod (35)
64. Joint of tube (63) and articulated connecting rod (35)
65. Central ball bearing connecting the articulated rod (35) to secondary arm
66. Joint of tube (67) to articulated connecting rod (35)
67. Tube for transmission of movement from articulated rod (35) to articulated joint (36)
68. Joint of tube (67) to articulated joint (36)
69. Joint of spring (70) to articulated joint (36)
70. Springs
71. Mounting piece of spring (70)
72. Articulated support for articulated basis (10) of secondary arms
73. Ball bearing joint of articulated support (72) to articulated basis (10)
74. Main weights
75. Fixing points of main weights (74) onto articulated basis (10)
76. Steel cable from left between two main arms (6)
77. Steel cable from right between two main arms (6)
78. Roller cable supporters for steel cables (77)
79. Roller cable supporters for steel cables (76)
80. Spring-joints fixing the cables (76) and (77) on head of main arms (6)
81. Small flange (brake-roller) for braking the rollers (78) and (79) onto main axle
82. Basis of ball bearing (21)
83. Stopper of tertiary arm
84. Joint
85. Basis for mounting curved piece (13)
86. Basis of automatic switch for tertiary arm (160 stroke end from bottom, and bearing for the main arm (6) from top
87. Metallic disc operating like a rotating bearing carrying the xcess weight of the machine preventing bending of the main axle, located beneath the big central flange
88. Central ball bearing of metallic disc (87)
89. Basis for the metallic disc (87)
90. Main basis of the machine
91. Rail operating as a guide for the tertiary arm (16) controlling the opening and closing of the automatic switch (12)
92. Frame of machine connected to disc (4).

## Claims

1. A machine mechanically controlled to generate power by using the gravity force consisting of main arms (6), secondary arms (9) and tertiary arms (16) with accessories, characterized in that the arms move simultaneously in opening and closing manner through articulated joints and bearings, the machine rotating as a whole, where a lower articulated bar (28) assisting movement of the secondary arm (9) in high position, moving by the ball bearing (27), when the secondary arm (9) rests thereon, causes the articulated bar (28) to carry on its stroke with the secondary arm (9) in the amount of 20 % of the stroke remaining for the secondary arm, with the main arm (6) and accesories; where the previous operation of the articulated bar (28) and the ball bearing (27) are useful to absorb the shock of the secondary arm (9) first, then removing the articulated bar with three branches (32) and as a result of moving the articulated bar (32), the bar with two branches (33) assisting transmission of movement, installed on the basis (34) of the secondary arm (9), which is a metal part installed on the disc (4) and connecting between the bars (32) and (33) moves, and the movement is shifted from the bar (33) to rod (35) to move the spring equipment (36), whose action is to assist the articulated basis (10) for the secondary arms (9) on which loads (8) are installed, for the purpose of achieving the balance of the basis (29) for the articulated bars (22), (23), (27) and (28), and the stationary basis of the basis (34), which is a base for the articulated bar (28) to assist movement of the secondary arm in high position and the ball bearing (27) to absorb shock and conserve surplus force; where in addition to the function of the basis (29) for articulated bars (22), (23), (27) and (28) as a basis for the ball bearings (27) and the articulated bar (28), it works on the same time in assisting the main arm (6) while opened from top; where the basis (29) is a basis for the articulated bars (22), (23), (27) and (28), which is at the same time responsible for assisting the main arm (6) while closed from bottom; where the shape of the secondary articulated arm (9) and its relation with the main arm (6), which is considered the body of the machine, is a basic relation assisting in the permanent movement of the machine by the actual reliance on the gravitational acceleration; where the secondary arm (9) is opened under the effect of its articulated basis (10), installed on which the load (8), which takes an oval direction with the assistance of the ball bearing (27) and the articulated bar (28), which means that it goes far from its rotation center and consequently achieves the permanent neutralization principle of the forces affecting the center of gravity in a rotating system; where the main arm (6) is opened under the effect of the connecting bar (26), and after the main and secondary two arms pass one third of the stroke specified for both of them, they both rest on the tertiary arm (16), whose function is to absorb the shocks and is equiped with an automatic switch center (12) and a basis (11) fixed on the big central flange (2), and when the three arms move together to the end of the specified stroke, the special switch automatically switches off, which is adjusted on the spring of the third arm, which leads to storing a potential force within the automatic switch center (12) that can be used while lifting the secondary arm (9) from bottom to top; where this stored potential force is considered a very great additional force, which appears when closing the main arm (6) at the bottom of the machine, which is being closed in the direction of the center of the rotating system, and consequently, after passing one third of the stroke for the two secondary and main arms, the basis (11) of the automatic switch center (12) automatically opens and consequently leads to closing the main arm (6) through the connecting bar (26) and pushing the secondary arm (9); where this process is being done for every arm, and the number of arms in the rotating system is preferably sixteen arms, at present, which can be increased or decreased upon request, always by four.

2. A machine for generating power according to claim 1, where the rotating system is depending on the shape of the secondary arm and its location in standard and accurate form in addition to its direct relation through an adjustable joint with the main arm.

3. The secondary arm according to claim 1 specially shaped and connected to the articulated basis for weights, which makes the front portion of the articulated arm take an oval direction, thus going farther from its rotation center, and consequently making the secondary arm take the same direction, increasing the distance from the system rotation center, achieving the principle of permanent neutralization of the forces affecting the center of gravity in a rotation system.

4. The set of the secondary arm and the main arm according to claim 1, along with their mutual resting on the tertiary arm, characterized in that it absorbs mechanical shocks that may affect the balance of the system, make the three arms as one set passing the distance specified for very accurately under the effect of gravitational acceleration.

5. The tertiary arm according to claim 1, characterized in that it absorbs the shocks and conserves a very great potential energy by means of an adjustable spring, this potential energy being generated in the spring itself as a result of the pressure of the two secondary and main arms during their drop downwards under the effect of gravitational acceleration, the potential energy being available for use as additional force while closing the main arm and raising it exactly to the system center, and also pushing the secondary arm upwards to complete its stroke.

6. The continuous opening process of the main arm and its accessories from the system top and its closing process from underneath through the oval articulated bearing.

7. The control process of the adjustable switch of the tertiary arm.

8. The steel cable connection between each two symmetrical arms.

9. The use of the machine to generate power according to claim 1 in houses, gardens, greenhouses, ships and vessels, industrial plants, isolated farms and villas etc.
